(19)

Europäisches
Patentamt

European
Patent Office

Office européen
des brevets

(11) **EP 4 534 456 A1**

(12) **EUROPEAN PATENT APPLICATION**

(43) Date of publication:
**09.04.2025 Bulletin 2025/15**

(21) Application number: **24191844.0**

(22) Date of filing: **30.07.2024**

(51) International Patent Classification (IPC):
**B65G 43/08** (2006.01)        **B65G 47/31** (2006.01)

(52) Cooperative Patent Classification (CPC):
**B65G 47/31; B65G 43/08;** B65G 2201/0258;
B65G 2203/0233; B65G 2203/0291; B65G 2207/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.10.2023  IT 202300020823**

(71) Applicant: **Italianpack S.p.A.**
**22100 Como (CO) (IT)**

(72) Inventors:
• **PETRINI, Tomaso**
**22100 Como (CO) (IT)**
• **BERNASCONI, Devis**
**22063 Cantù (CO) (IT)**
• **PIOVESAN, Lorenzo**
**22070 Albiolo (CO) (IT)**

(74) Representative: **Praxi Intellectual Property
Lugano
Via San Gottardo, 15
6900 Lugano (CH)**

(54) **LIQUID-FILLED CONTAINER CONVEYING LINE INCLUDING AN ANTI-SLOSHING DEVICE**

(57)    A conveyor line for a removable closure on a container comprising a first motorised conveyor at a constant speed for the container filled with a liquid, a second motorised conveyor downstream of the first conveyor having a motorisation such as to control the variation of the position of the container, a first sensor arranged in an input portion of the first conveyor to detect the passage of the container on the first conveyor, a control unit connected in data exchange with the first sensor and programmed to execute a non-linear position variation function in time applied by the second motorised conveyor to the container on the basis of signals received from the first sensor and a mathematical model of wave damping of a liquid in a moving container, so as to distance the container on board the second conveyor by a predetermined distance from the next container arriving from the first conveyor and, during the advancement on board the second conveyor, damping an oscillation of the liquid in the container.

Fig.1

**Description**

TECHNICAL FIELD

The present invention relates to the field of industrial conveyor lines for transporting liquid-filled containers that can be sealed by means of a peelable closure, e.g. packaging lines, in particular a conveyor line comprising a first conveyor and a second conveyor downstream of the first conveyor which receives the liquid-filled containers from the first conveyor.

STATE OF THE ART

In the sector of industrial conveyor lines for transporting liquid-filled containers that can be sealed with a removable closure, e.g. packaging lines for foodstuffs, cosmetics, paints, etc., solutions comprising a first conveyor, e.g. a conveyor belt, which generally advances at a constant speed and is configured to receive liquid-filled containers from an upstream processing station, are widely used, solutions comprising a first conveyor, e.g. a conveyor belt, which generally advances at a constant speed and is configured to receive liquid-filled containers from an upstream processing station, which containers can be loaded onto this first conveyor via e.g. a conveyor belt or manually, e.g. loaded by an operator from a trolley or platform, are widely used. Furthermore, processing operations upstream of the first conveyor are generally such that containers filled with liquid are placed on the first conveyor without there being a predefined longitudinal distance between one container and the next. However, in order to increase productivity, the application of the peelable closure on such liquid-filled containers is generally achieved by automatically picking up, e.g. by means of a robotic arm, several containers on the conveyor line, so that the peelable closure is applied to several containers together in a downstream sealing station. For this reason, today's conveyor lines for liquid-filled containers also include a second conveyor downstream of the first conveyor, which is configured to receive liquid-filled containers on board in order to position one container at a predefined distance from the next. To achieve this, the second conveyor is configured to have an adjustable forward speed so that a container can be positioned at a predefined distance from the next one coming from the first conveyor. However, when containers filled with liquid are loaded onto the first or second conveyor, the container in contact with a surface of the first or second conveyor undergoes acceleration, either positive or negative, which causes an undesirable oscillation of the mass of liquid inside the container, with the risk of the liquid escaping. As can be understood, such an undesirable situation can cause numerous problems, e.g. the escaping liquid becomes dirty and can damage conveyor line components, and at the same time causes a reduction in the liquid fill level in each container compared to a predefined fill level previously achieved, which also has negative consequences for the storage e.g. of food inside the container. For example, a reduced fill level causes faster spoilage of food that has to be kept submerged in the container. For this reason, the solutions currently on the market involve low advancement speeds of the first and second conveyors, so as not to generate undesirable fluctuations in the mass of liquid inside each container. As can be understood, due to the reduced speed these solutions lead to reduced production capacity and longer packaging times.

It is therefore an ever-growing need to realise solutions capable of maximising the forward speed of the conveyor lines on which the liquid-filled containers are transported by minimising the oscillations induced on the liquid mass in order to increase the capacity of the production line, e.g. the packaging line.

SCOPE AND SUMMARY OF THE INVENTION

It is an object of the present invention to meet at least part of the above-mentioned requirements, wherein this object is achieved by means of a conveyor line for a removable closure on a liquid-filled container according to claim 1.

According to a preferred embodiment of the present invention, there is presented a conveyor line for containers filled with a liquid to which a removable closure is applied, e.g. by means of a sealing station downstream of said conveyor line. For example, the conveyor line may be installed within a packaging line, e.g. of trays containing a liquid in which food products are immersed before being sealed with a removable closure, e.g. a peelable film. Advantageously, the conveyor line described herein is optimised in such a way that the liquid-filled containers can be advanced at a higher speed than existing solutions, while at the same time preventing oscillations being generated on the mass of liquid and causing it to spill out of the container when being conveyed. Preferably, such a conveyor line can be used in various fields of application, e.g. cosmetics, food, etc., to transport containers each filled with a liquid of different density, e.g. creams, yoghurt, sauces, cottage cheese, etc. In particular, to achieve this, the conveyor line for a removable closure on a container filled with a liquid comprises a first motorised conveyor, e.g. a conveyor belt, configured to receive containers from an upstream processing station and transport such containers to a downstream processing station, e.g. a sealing station, advancing at a constant speed, e.g. actuated by an electric motor. Furthermore, since the containers received on board the first motorised conveyor are not spaced so that one container and the next container have a predefined distance between them, in case there are processing stations that pick up containers in groups in which one container is spaced apart from the next container at a predefined distance, it is necessary to arrange such containers so that there is a predefined distance between one container and the next container, otherwise a pick-up device of the next processing station fails to pick up the group of containers. Therefore, the conveyor line includes a second motorised conveyor downstream of the first conveyor with a motor by means of which the position of the container can be varied non-linearly in time, i.e. adjusting the speed and acceleration of the second conveyor, and thus of the container when it is on board the latter. To do this, the conveyor line comprises a first sensor, e.g. a photocell, arranged in an input portion of the first motorised conveyor and configured to detect the passage of each container passing in front of said sensor, and a control unit connected in data exchange with the first sensor and programmed to perform a non-linear position variation function in time applied by the second motorised conveyor to the container based on signals received from the first sensor and a mathematical model of wave damping of a liquid in a container. For example, such a mathematical model may include a damping function of a liquid in a moving container known from the literature. In this way, it is possible to distance the container on board the second motorised conveyor by a predetermined distance from the next one arriving from the first conveyor. For example, to achieve this, the electronic control unit is configured to receive predefined work parameters as input, e.g. entered by a user via a graphical interface connected to the electronic control unit, representative of the dimensional and mechanical characteristics of the container and the liquid, the advancement speed of the first motorised conveyor, the distance between the first sensor and the input portion of the second motorised conveyor, the predetermined distance that a container must have from the next one on board the second motorised conveyor. In this way, the electronic control unit is configured to process said working parameters by means of the mathematical model so as to generate a first kinematic function, e.g. the variation of the position of the container over time, which is to be applied to the second motorised conveyor so as to distance one container from the next container by the predetermined distance. According to a further aspect of the present invention, the damping function of a liquid in a moving container subjected to a transverse load is exploited to damp oscillations that may be generated on the mass of liquid moving on the second motorised conveyor due to the resulting accelerations of the advancement of said second conveyor on the basis of the first kinematic function. In particular, the electronic control unit is configured to process the first kinematic function and the damping function in order to generate a second kinematic function, e.g. a variation of the displacement of the container that is non-linear in time, on the basis of which the second motorised conveyor is actuated, by means of a control signal sent by the electronic control unit to the electric motor, so as to adjust the speed and acceleration of the second conveyor not only to position a container at a predefined distance from the next container on the second conveyor, but also to dampen any oscillations of the mass of liquid in each container advancing on the second conveyor. For example, such a second kinematic function can be obtained by a convolution product, preferably in the time domain, between the first kinematic function and the damping function. In this way, as the second conveyor advances, the oscillation of the liquid in the container is damped, minimising the risk of the container escaping. To achieve this, a known resonance frequency of the liquid contained in the container is used as an input parameter, i.e. the frequency at which an oscillation of the mass of liquid in the moving container is generated. In particular, a parameter representative of this resonance frequency can be provided as input to the electronic control unit, i.e. entered together with the predefined working parameters via the graphic interface, so that this parameter is processed by the electronic control unit via the mathematical model. In this way, it is possible to run the second conveyor at higher speeds than existing solutions, e.g. 40 m/min, without spilling liquid from the containers and thus increasing the production capacity of the factory.

DESCRIPTION OF DRAWINGS

The constructional and functional characteristics of the conveyor line for a removable closure on a container can be better understood from the detailed description below, in which reference is made to the attached figures, which represent a preferred and non-limiting form of realisation, in which

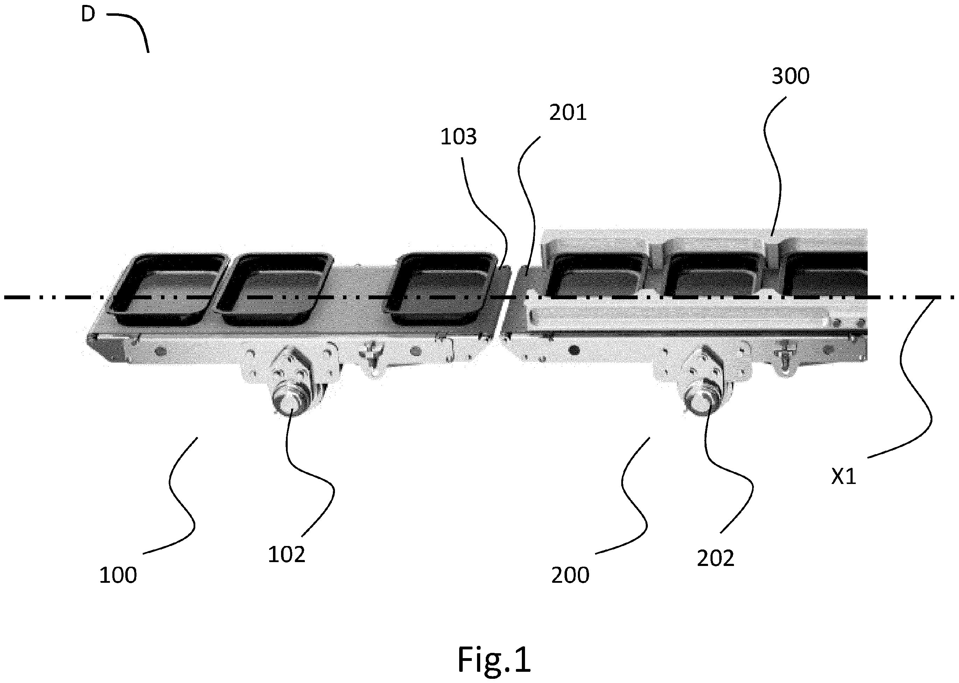

- Fig.1 shows a view of a conveyor line according to a preferred embodiment of the present invention;

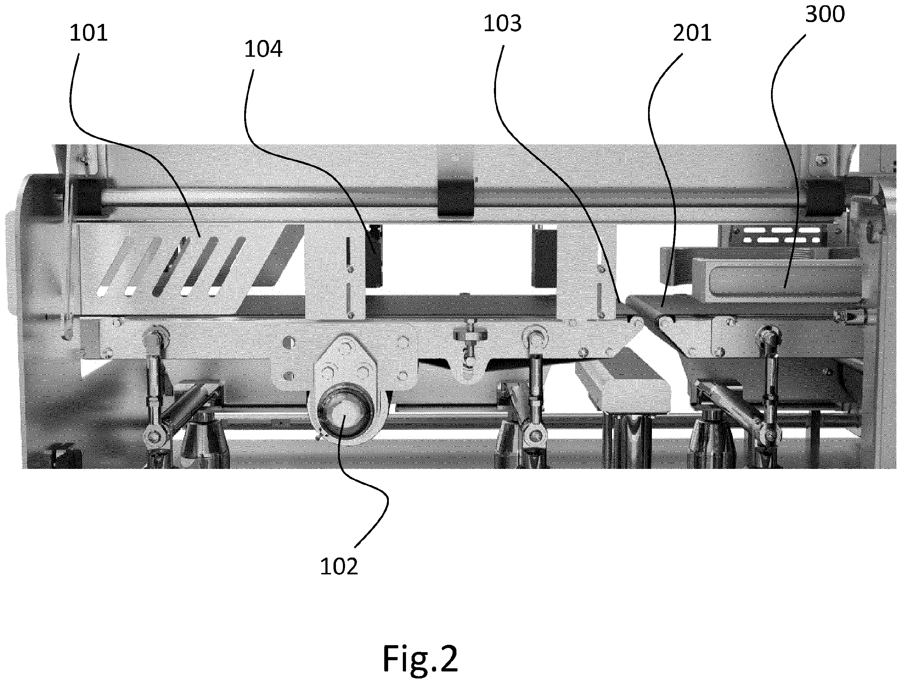

- Fig.2 shows a detailed view of the conveyor line of Fig. 1;
- Fig.3a and 3b each show a diagram comparing the law of motion optimised according to the present invention and a traditional law of motion for positioning one container at a predefined distance from the next in the conveyor line of Fig.1.

DETAILED DESCRIPTION OF THE INVENTION

According to a preferred embodiment of the present invention, a schematic view of a conveyor line D configured to transport liquid-filled containers, preferably but not limitedly for the food sector, on which a removable closure, e.g. a peelable film, is applied and to seal the container so as to protect e.g. the food inside the container. Preferably, such a conveyor line can be used in various application areas, e.g. cosmetics, food, etc., for transporting containers each filled with a liquid having a different density, e.g. creams, yoghurt, sauces, cottage cheese, etc. Preferably, but not limitedly, the density of the liquid in the containers may be less than 1 g/ml as for example in the case of cosmetic creams where the density may vary between 0.8 and 0.95 g/ml, or greater than 1 g/ml as for example in the food sector where the density may be as in the case of yoghurt 1.03 g/ml or as in the case of sauces between 1.06 and 1.13 g/ml. In particular, such a conveyor line D may be installed along a production line within a factory so as to receive containers filled with liquid from a processing station upstream of the conveyor line, and transport said containers to a sealing station downstream of said conveyor line wherein the removable closure is applied to each container. According to a first aspect of the present invention, the conveyor line D comprises a first motorised conveyor 100, e.g. a conveyor belt, configured to receive containers from an upstream processing station. Such containers may be transported onto the first motorised conveyor 100 e.g. via an upstream conveyor belt, or optionally may be loaded onto the first motorised conveyor manually by an operator, e.g. picked up from a trolley or platform. In both cases, the processing operations upstream of conveyor line D are such that the liquid-filled containers are placed on that first motorised conveyor without there being a predefined longitudinal distance between one container and the next. Occasionally, the liquid-filled containers may be loaded aboard the first motorised conveyor 100 so as to have a laterally displaced position with respect to a feed axis X1 of the first motorised conveyor 100, whereby a centring device 101 may be provided in an inlet portion of said first conveyor, e.g. a pair of walls opposed with respect to the axis X1 and converging towards the end end of said first conveyor. In this way, when containers filled with liquid are brought onto the first conveyor 100, the centring device 101 guides each container so that it is arranged at a predefined transverse distance relative to the axis X1. According to a further aspect of the present invention, the first motorised conveyor 100 is configured to advance at a constant speed so as to transport the liquid-filled containers to the processing station where the removable closure is applied to each container. For example, the first motorised conveyor 100 may comprise on board a first electric motor 102, e.g. a brushless motor or any motor coupled to an encoder and actuatable to advance e.g. a conveyor belt on which containers are supported. Preferably, the first motorised conveyor 100 comprises a rubber conveyor belt to increase the adhesion of the container with the surface of the conveyor belt. As can be understood, since the first motorised conveyor 100 advances at a constant speed, the containers filled with liquid during the advancement aboard the first motorised conveyor 100 maintain the longitudinal distance between them with which they were loaded as they entered said first conveyor. However, in order to speed up the application of the removable closure on the containers, the sealing stations downstream of the conveyor line D are generally configured to process several containers at a time in order to increase the production capacity of the factory. Therefore, as the operation of picking up containers from conveyor line D is performed automatically by picking up containers filled with liquid from a predefined position on conveyor line D, these containers must be arranged on the conveyor line so that there is a predefined longitudinal distance between one container and the next. To achieve this, the conveyor line D comprises a second motorised conveyor 200 arranged downstream of the first motorised conveyor 100, e.g. a conveyor belt preferably made of rubber to increase the adhesion of the container with the surface of the conveyor belt. In particular, said second motorised conveyor 200 has an inlet portion 201 facing an end portion 103 of the first motorised conveyor, so that containers filled with liquid leaving the end portion of the first conveyor contact the inlet portion 201 of the second conveyor 200 by boarding the same. According to a further aspect of the present invention, the second motorised conveyor 200 includes on board a second electric motor 202 implementable so as to regulate the forward speed and acceleration of the second motorised conveyor, e.g. a brushless motor. In particular, said second electric motor 202 is exploited so that, by automatically adjusting the forward speed and acceleration of the second motorised conveyor 200, it is possible to arrange the container filled with liquid on board said second conveyor at a predetermined distance from the next container arriving from the first motorised conveyor 100. To achieve this, the conveyor line D comprises a first sensor 104, e.g. a photocell, arranged in an inlet portion of the first conveyor 100 preferably downstream of the centring device 101, and configured to detect a signal representative of the passage of each container in front of said first sensor. In order to process the detected signal so as to regulate the forward speed and acceleration of the second motorised conveyor 200, the conveyor line D further comprises an electronic control unit (not shown in the figure), e.g. a programmable logic controller or PLC, programmed to receive signals from the first sensor 104 and process said signals on the basis of a mathematical model of wave damping of a liquid in a moving container. In particular, said electronic control unit is configured to actuate the second electric motor 202 so as to vary the speed and acceleration of the second motorised conveyor 200 so as to position one container and the next container at a predefined distance on said second conveyor. To achieve this, the electronic control unit is configured to receive input of predefined working parameters, e.g. entered by a user via a graphical interface such as a screen connected to the electronic control unit on the line. For example, such predefined working parameters may include the size of the container, the desired feed rate of the first conveyor 100, the distance between the first sensor 104 and the input portion of the second motorised conveyor 200, the desired distance between one container and the next on the second conveyor, the number of containers spaced out in a predefined manner on the second conveyor, the desired longitudinal position of each container on the second conveyor. In this way, the electronic control unit is programmed to process, by means of the mathematical model indicated above, the signal received from the first sensor 104 and the predefined working parameters comprising the position data of each container so as to send a signal to the second electric motor 202 to vary the speed and acceleration of the second conveyor. In this way, it is possible to position one container and the next container at a predefined distance on the second conveyor, i.e. the distance set during the input of the predefined working parameters. However, based on this design configuration, when containers filled with liquid are loaded on board the first motorised conveyor 100 from an upstream work station, or when such containers are loaded on board the second motorised conveyor 200 from the first motorised conveyor 100, due to the acceleration transmitted by the second motorised conveyor and due to contact with a new moving surface, an oscillation may be generated on the mass of liquid in each container with the risk of spilling out of the container. This phenomenon is also known by the term 'sloshing', i.e. the movement of a liquid within a container due to instantaneous, e.g. translational acceleration as is the case here. As can be understood, such an undesirable situation can cause numerous problems, e.g. the escaping liquid fouls and can damage the components of the conveyor line D and at the same time causes a reduction in the liquid filling level in each container compared to a predefined filling level previously achieved, with negative consequences also in the storage e.g. of the food inside the container. According to the invention, on the other hand, the conveyor line D is configured so that any oscillations generated on the liquid in each container aboard the second motorised conveyor 200 are dampened when the latter advances aboard said second conveyor. In particular, to achieve this, it is necessary to know the resonance frequency of the liquid contained within each container, i.e. the frequency at which an oscillation is induced to the liquid in the container. As can be understood, the value of the resonance frequency depends on the mass of liquid and the type of liquid contained within the container, which is available in the literature or can be calculated through experimental tests. For example, for this type of application, i.e. applications in which the transport of a liquid contained within a tray or container that can be handled by hand, such as in the food industry, the resonance frequencies of the masses of transported liquid that generate an unwanted oscillation that is to be damped are generally in the range of 2 - 5 Hz. Preferably, by presenting each container with minimal differences in liquid filling, it is possible to identify a frequency range around a value of the sample resonance frequency in order to intercept different resonance frequency values due to a higher or lower liquid filling level in the container. Thus, according to one aspect of the present invention, a parameter representative of the liquid resonance frequency value is included among the predefined working parameters received as input to the electronic control unit. Thus, when a first container passes in front of the sensor 104, a signal detecting the passage of said first container is sent to the electronic control unit. For example, the first sensor 104 may be a presence detector sensor. Since the speed of the first motorised conveyor 100 and the distance of the sensor 104 from the inlet portion 201 of the second conveyor on which each container is deposited are known, the electronic control unit is programmed to process said signal to estimate the change in position over time of said first container along the direction of advancement of the first conveyor with respect to the position of said sensor, e.g. with a predefined sampling rate such as, for example, 1-5 ms. Furthermore, the speed of the first motorised conveyor being known and constant, when a second container subsequent to the first container transits in front of the first sensor 104, the electronic control unit is further programmed to process the detection signal of the passage of the second container to estimate the position of said second container with respect to the first container, e.g. in terms of distance. In this way, the distance between the first and the second container and the predefined distance at which one container is to be found from the next container on the second motorised conveyor 200 being known, the electronic control unit is further programmed to process, on the basis of this known information, a first kinematic function F1, e.g. the variation of the position of the container over time, whereby the second electric motor 202 is actuated to advance the second motorised conveyor 200 when the first container is received on board said second conveyor so that the first container is positioned at the predefined distance from the second container when the latter in turn is received on board said second conveyor. In particular, when the first container reaches the end portion 103 of the first motorised conveyor to be deposited on the second motorised conveyor, based on said first kinematic function F1 the electronic control unit sends an actuation signal to the second electric motor 202 of the second conveyor 200 so that the speed and acceleration of said second conveyor is adjusted to bring the first container to the predefined distance from the second container arriving from the first conveyor. However, the variation in speed and acceleration of the second motorised conveyor 200 may generate excitation forces of the mass of liquid in each container, which in turn may generate oscillations of said mass of liquid having an amplitude such as to cause the liquid to escape from the respective container, e.g. at an excitation frequency comparable to the resonance frequency of the mass of liquid. Therefore, according to a further aspect of the present invention, in order to minimise the amplitude of oscillation of the mass of liquid in each container on board the second motorised conveyor as it advances, the first kinematic function F1, e.g. the variation of the position of the container over time, processed by the electronic control unit to position at a predefined distance a container from the next container arriving on the second conveyor is optimised so that a damping is applied to such oscillations as a container advances on the second motorised conveyor 200, thereby avoiding the risk of liquid escaping from the container. To achieve this, the mathematical model includes a damping function F2 of a mass of liquid in a moving container subjected to transverse acceleration. For example, the following damping function known in the literature and representative of the variation in amplitude of the oscillation of a mass of liquid in a moving container over an oscillation period can be used $T_m$:

$$u(\tau) = \begin{cases} \mu\left(e^{-r\zeta_m\omega_m\tau} - e^{-p\zeta_m\omega_m\tau}\right) per \ 0 \leq \tau \leq \left(\frac{T_m}{p}\right) \\ \mu e^{-r\zeta_m\omega_m\tau}(1-\delta) per \left(\frac{T_m}{p}\right) \leq \tau \leq \left(\frac{T_m}{r}\right) \\ \mu\left(\sigma e^{-p\zeta_m\omega_m\tau} - \delta e^{-r\zeta_m\omega_m\tau}\right) per \left(\frac{T_m}{r}\right) \leq \tau \leq \left(\frac{T_m}{p} + \frac{T_m}{r}\right) \\ 0 \ for \ other \ conditions \end{cases}$$

in which $\omega_m$ e $\zeta_m$ are respectively the resonance frequency of the liquid mass and the damping ratio, and where:

$$\delta = e^{2\pi\left(\frac{r}{p-1}\right)\frac{\zeta_m}{\sqrt{1-\zeta_m^2}}}$$

$$\sigma = e^{2\pi\left(\frac{p}{r-1}\right)\frac{\zeta_m}{\sqrt{1-\zeta_m^2}}}$$

$$\mu = \frac{pr\zeta_m\omega_m}{(p-r)\left(1 - e^{\frac{-2\pi\zeta_m}{\sqrt{1-\zeta_m^2}}}\right)^2}$$

$$T_m = \frac{2\pi}{\omega_m\sqrt{1-\zeta_m^2}}$$

where e=2.718 (Neper's number).
while *p* and *r* are experimentally derived constants, where:

*p* = 1.3444
*r* = 0.8110

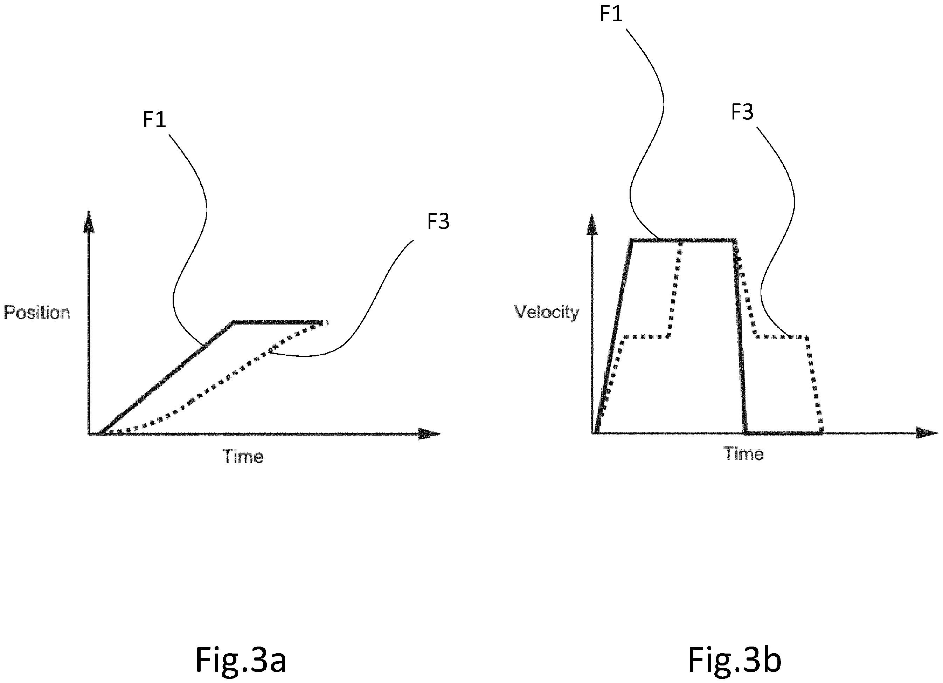

The above parameters are known and provided as input to the electronic control unit so that the latter processes these parameters to estimate the damping function of the liquid mass indicated above. In this way, the first kinematic function F1, e.g. the variation of the position of the container over time, used to actuate the second motorised conveyor 200 so as to position one container from the next at a predefined distance, and the damping function F2 are processed by the electronic control unit so as to generate a second kinematic function F3, e.g. the variation of the position of the container over time, on the basis of which the second electric motor 202 is actuated, by means of a control signal sent by the electronic control unit, so as to adjust the speed and acceleration of the second motorised conveyor 200 not only to position one container from the next container at a predefined distance on the second motorised conveyor, but also to dampen any oscillations of the mass of liquid in each container advancing on said second conveyor. For example, such a second kinematic function F3 can be obtained by a convolution product, preferably in the time domain, between the first kinematic function F1 and the damping function F2. In this way, as can be seen in Fig.3a and 3b, the resulting second kinematic function F3 presents a different profile from that of the first kinematic function F1, i.e. without the contribution of the damping function F2, and such that it provides the benefits indicated above. Furthermore, in order to actuate the electric motor 202 so that the position of the container on board the second motorised conveyor 200 varies on the basis of the second kinematic function F2, the signal sent by the electronic control unit is a signal containing information about said second kinematic function to be applied to the second conveyor which is received by a control unit of the electric motor 202. For example, the signal sent by the electronic control unit may comprise a communication protocol, e.g. an ethercat protocol, to actuate the electric motor. Accordingly, the electric motor control unit is programmed to process such a signal to generate an actuation signal for the electric motor, which, receiving such a signal in regulated voltage and current, delivers a torque required to advance the second conveyor 200 based on a non-linear container position variation function over time, e.g. by varying conveyor speed and acceleration. As can be understood, as the number of containers that are received on board the second motorised conveyor 200 increases, the mass of liquid to be transported increases and, consequently, so does the electric power required by the electric motor 202 to deliver sufficient torque to provide the necessary speeds and accelerations to vary the position of the container based on the second kinematic function F2. In order to achieve this, the electric motor 202 may preferably comprise an encoder by means of which the position of the electric motor can be controlled, thereby adjusting the absorption of electrical power required depending on the load to be handled present on board the second motorised conveyor. For example, when the number of containers on the second conveyor 200 increases, the mass to be handled and therefore the torque required increases, with a consequent increase in power absorption from the mains. Therefore, when the container filled with liquid contacts the second conveyor 200, the electronic control unit is programmed to actuate the second electric motor 202 to vary the acceleration applied by the second conveyor to the container so that, in addition to arranging the containers at a predetermined distance from each other on the second conveyor 200, an oscillation of the liquid in that container is dampened as the container advances on the second conveyor. In this way, it is possible to run the second conveyor at higher speeds than existing solutions without spilling liquid from the containers, thereby increasing the production capacity of the factory. For lower density liquids such as cosmetic creams, for example, the speed of the second conveyor can preferably but not limitedly be increased to 25 m/min, while for higher density liquids such as yoghurt or sauces this speed can be increased to 40 m/min. In this way, each container that is loaded on board the second conveyor 200 is positioned at a predetermined distance from the next one so that a desired number of containers loaded on board the second conveyor are brought to a position where they can be picked up by a mover 300, e.g. a robotic arm, actuated intermittently via the electronic control unit. In particular, such a handler is configured to pick up one or more containers on the second conveyor 200 so as to transport them to a sealing station (not shown in the figure) which receives the containers from the handler so as to apply the peelable closure to them.

Preferably, conveyor line D can include a welding station and a mover 300 on board, arranged downstream of the second conveyor 200.

Preferably, the first and second conveyors may comprise double belt conveyors, i.e. each conveyor has a pair of transversely spaced carpets, so that the first sensor 104 can read the container from above. The sensor 104 also detects the transverse position of the container on the conveyor 100 relative to the axis X1, so that the electronic control unit processes this signal to provide a warning signal if the transverse distance of the container from the axis X1 is greater than a predefined threshold.

**Claims**

1. Conveyor line (D) for a removable closure on a container comprising:

   - a first motorised conveyor (100) at constant speed for the container filled with a liquid;
   - a second motorised conveyor (200) downstream of the first conveyor with motorisation such that it controls the change in position of the container in a non-linear manner over time;
   - a first sensor (104) placed in an input portion of the first conveyor (100) to detect the passage of the container on the first conveyor;
   - a control unit connected in data exchange with the first sensor (104) and programmed to perform a non-linear position variation function in time applied by the second motorised conveyor (200) to the container on the basis of signals received from the first sensor and a mathematical model of wave damping of a liquid in a moving container, so as to distance the container on board the second conveyor (200) by a predetermined distance from the next container arriving from the first conveyor (100) and, during the advancement on board the second conveyor, damping a liquid wave in the container.

2. Conveyor line (D) according to claim 1, comprising a centring device (101) arranged in the input portion of the first motorised conveyor (100) and in a position arranged back to the first sensor (104) with respect to the direction of advancement of said first conveyor parallel to an axis (X1), wherein said centring device (101) is configured to position each container on board the first motorised conveyor at a predefined transverse distance with respect to the axis (X1).

3. Conveyor line (D) according to claim 1, comprising a mover (300) intermittently actuated and operable via the control unit to pick up a container from the second conveyor (200), and a sealing station (400) receiving the container from the mover (300), and the electronic control unit being programmed to perform a non-linear position variation function in time applied by the mover to the container on the basis of said mathematical model of wave damping of a liquid in a moving container to damp an oscillation of the liquid in the container as it moves from the second conveyor (200) to a sealing station (500).

4. Conveyor line (D) according to claim 1, wherein the mathematical model comprises a damping function of the amplitude of the oscillation of a mass of liquid in a container moving over a period of oscillation ($T_m$), said damping function being defined by means of the following parameters provided as input:

$$u(\tau) = \begin{cases} \mu\left(e^{-r\zeta_m\omega_m\tau} - e^{-p\zeta_m\omega_m\tau}\right) \ per \ 0 \leq \tau \leq \left(\frac{T_m}{p}\right) \\[2mm] \mu e^{-r\zeta_m\omega_m\tau}\left(1 - \delta\right) per \left(\frac{T_m}{p}\right) \leq \tau \leq \left(\frac{T_m}{r}\right) \\[2mm] \mu\left(\sigma e^{-p\zeta_m\omega_m\tau} - \delta e^{-r\zeta_m\omega_m\tau}\right) per \left(\frac{T_m}{r}\right) \leq \tau \leq \left(\frac{T_m}{p} + \frac{T_m}{r}\right) \\[2mm] 0 \ \text{for other conditions} \end{cases}$$

In which:

$\omega_m$ e $\zeta_m$ are the resonance frequency of the liquid mass and the damping ratio, respectively, where:

$$\delta = e^{2\pi\left(\frac{r}{p-1}\right)\frac{\zeta_m}{\sqrt{1-\zeta_m^2}}}$$

$$\sigma = e^{2\pi\left(\frac{p}{r-1}\right)\frac{\zeta_m}{\sqrt{1-\zeta_m^2}}}$$

$$\mu = \frac{pr\zeta_m\omega_m}{(p - r)\left(1 - e^{\frac{-2\pi\zeta_m}{\sqrt{1-\zeta_m^2}}}\right)^2}$$

$$T_m = \frac{2\pi}{\omega_m\sqrt{1 - \zeta_m^2}}$$

while $p$ and $r$ are experimentally derived constants, where:

$p$ = 1.3444
$r$ = 0.8110

5. Conveyor line (D) according to claim 1, in wherein said control unit is configured to damp an oscillation of a mass of the liquid transported in the container having resonance frequencies $\omega_m$ within a range of 2 - 5 Hz.

Fig.1

EP 4 534 456 A1

Fig.2

Position

F1

F3

Time

# Fig.3a

Velocity

F1

F3

Time

# Fig.3b

Europäisches
Patentamt

European
Patent Office

Office européen
des brevets

# EUROPEAN SEARCH REPORT

**Application Number**

EP 24 19 1844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/096867 A1 (SCHIAVINA ANDREA [IT]) 9 April 2015 (2015-04-09) | 1-3 | INV. B65G43/08 B65G47/31 |
| A | * abstract * * page 1 - page 3 * * figures 1-12 * | 4,5 | |
| Y | US 2004/226262 A1 (SALVONI PAOLO [IT]) 18 November 2004 (2004-11-18) | 1-3 | |
| A | * abstract * * paragraph [0004] - paragraph [0017] * * pages 1-2 * | 4,5 | |
| A | US 5 826 406 A (MASSEY ROBERT D [US]) 27 October 1998 (1998-10-27) * the whole document * | 1-5 | |
| A | CN 108 639 709 A (MACCURA MEDICAL ELECTRONICS CO LTD) 12 October 2018 (2018-10-12) * the whole document * | 1-5 | |
| A | EP 0 967 150 A1 (ELOPAK SYSTEMS [CH]) 29 December 1999 (1999-12-29) * the whole document * | 1-5 | **TECHNICAL FIELDS SEARCHED (IPC)** <br> B65G |
| A | US 5 475 965 A (MONDINI GIOVANNI [IT]) 19 December 1995 (1995-12-19) * the whole document * | 1-5 | |
| A | GUAGLIUMI LUCA ET AL: "A Simple Model-Based Method for Sloshing Estimation in Liquid Transfer in Automatic Machines", IEEE ACCESS, IEEE, USA, vol. 9, 20 September 2021 (2021-09-20), pages 129347-129357, XP011879623, DOI: 10.1109/ACCESS.2021.3113956 * the whole document * | 4 | |

-/--

The present search report has been drawn up for all claims

| Place of search | Date of completion of the search | Examiner |
|---|---|---|
| The Hague | 9 January 2025 | Palais, Brieux |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

Europäisches
Patentamt
European
Patent Office
Office européen
des brevets

Application Number

EP 24 19 1844

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REINHOLD JAN ET AL: "A Dynamic Optimization Approach for Sloshing Free Transport of Liquid Filled Containers using an Industrial Robot", 2019 IEEE/RSJ INTERNATIONAL CONFERENCE ON INTELLIGENT ROBOTS AND SYSTEMS (IROS), IEEE, 3 November 2019 (2019-11-03), pages 2336-2341, XP033695720, DOI: 10.1109/IROS40897.2019.8968144 * the whole document * | 4 | |
| A | DI LEVA ROBERTO ET AL: "Time-Optimal Trajectory Planning for Anti-Sloshing 2-Dimensional Motions of an Industrial Robot", 2021 20TH INTERNATIONAL CONFERENCE ON ADVANCED ROBOTICS (ICAR), IEEE, 6 December 2021 (2021-12-06), pages 32-37, XP033995579, DOI: 10.1109/ICAR53236.2021.9659383 * the whole document * | 4 | |
| A | Ultrasource Llc: "UltraSource Rhino 10 / 12 Automatic Food Tray Sealer - "Anti Slosh" Feature", , 20 February 2019 (2019-02-20), XP093152004, Retrieved from the Internet: URL:https://www.youtube.com/watch?v=4vo3KYfTFfA [retrieved on 2024-04-16] * the whole document * | 1-5 | TECHNICAL FIELDS SEARCHED (IPC) |

The present search report has been drawn up for all claims

| Place of search | Date of completion of the search | Examiner |
|---|---|---|
| The Hague | 9 January 2025 | Palais, Brieux |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 1844

This annex lists the patent family members relating to the patent documents cited in  the above-mentioned European search report.
The members are as contained in the European Patent Office EDP file on
The European Patent Office is in no way liable for these particulars which are merely given for the purpose of information.

09-01-2025

| Patent document cited in search report | | | Publication date | Patent family member(s) | | | Publication date |
|---|---|---|---|---|---|---|---|
| US 2015096867 | A1 | | 09-04-2015 | AU | 2013283545 | A1 | 20-11-2014 |
| | | | | BR | 112014027670 | A2 | 27-06-2017 |
| | | | | CA | 2872632 | A1 | 03-01-2014 |
| | | | | CN | 104271477 | A | 07-01-2015 |
| | | | | EP | 2864227 | A1 | 29-04-2015 |
| | | | | ES | 2625020 | T3 | 18-07-2017 |
| | | | | HK | 1210126 | A1 | 15-04-2016 |
| | | | | RU | 2014142933 | A | 27-05-2016 |
| | | | | US | 2015096867 | A1 | 09-04-2015 |
| | | | | WO | 2014001159 | A1 | 03-01-2014 |
| US 2004226262 | A1 | | 18-11-2004 | AT | E323646 | T1 | 15-05-2006 |
| | | | | DE | 60304676 | T2 | 14-12-2006 |
| | | | | DK | 1468913 | T3 | 21-08-2006 |
| | | | | EP | 1468913 | A1 | 20-10-2004 |
| | | | | ES | 2266680 | T3 | 01-03-2007 |
| | | | | US | 2004226262 | A1 | 18-11-2004 |
| US 5826406 | A | | 27-10-1998 | JP | 4275766 | B2 | 10-06-2009 |
| | | | | JP | H10316222 | A | 02-12-1998 |
| | | | | NO | 321160 | B1 | 27-03-2006 |
| | | | | US | 5826406 | A | 27-10-1998 |
| CN 108639709 | A | | 12-10-2018 | NONE | | | |
| EP 0967150 | A1 | | 29-12-1999 | DE | 69913250 | T2 | 09-09-2004 |
| | | | | EP | 0967150 | A1 | 29-12-1999 |
| | | | | EP | 1378452 | A1 | 07-01-2004 |
| | | | | JP | 2000025925 | A | 25-01-2000 |
| US 5475965 | A | | 19-12-1995 | DE | 69505877 | T2 | 27-05-1999 |
| | | | | EP | 0680880 | A1 | 08-11-1995 |
| | | | | ES | 2125511 | T3 | 01-03-1999 |
| | | | | US | 5475965 | A | 19-12-1995 |

EPO FORM P0459

For more details about this annex : see Official Journal of the European Patent Office, No. 12/82